# EUROPÄISCHE PATENTANMELDUNG

(11) **EP 2 283 763 A2**
(43) Veröffentlichungstag der Anmeldung: **16.02.2011**
(21) Anmeldenummer: 10170434.4
(22) Anmeldetag: 22.07.2010
(51) Int. Cl.: A47L 15/42

(54) **Wasserführendes Haushaltsgerät**

(30) Priorität: 06.08.2009 DE 102009028275
(71) Anmelder: BSH Bosch und Siemens Hausgeräte GmbH, 81739 München (DE)
(72) Erfinder: Büsing, Johannes, 86494 Emersacker (DE); Heisele, Bernd, 89567 Sontheim (DE); Lugert, Michael, 89343 Jettingen-Scheppach (DE)

(57) **Zusammenfassung**

Die Erfindung betrifft ein wasserführendes Haushaltsgerät, insbesondere eine Geschirrspülmaschine, mit einer Flüssigkeitsleitung (23), in der ein Ventil (26) angeordnet ist, das ein verstellbares Ventilelement (45) aufweist, das zum Öffnen und Schließen des Ventils (26) mit einem Ventilsitz (49) zusammenwirkt. Erfindungsgemäß weist das Ventil (26) ein thermisches Stellglied (41) auf, mittels dem das Ventilelement (45) verstellbar ist.

## Beschreibung

Die Erfindung betrifft ein wasserführendes Haushaltsgerät, insbesondere eine Geschirrspülmaschine, mit einer Flüssigkeitsleitung, in der ein Ventil angeordnet ist, das ein verstellbares Ventilelement aufweist, das zum Öffnen und schließen des Ventils mit einem Ventilsitz zusammen wirkt.

Während eines Spülgangs durchlaufen Geschirrspülmaschinen Spülprogramme, die aus einer Anzahl von Teilprogrammschritten bestehen, wie z.B. Vorspülen, Reinigen, Zwischenspülen, Klarspülen und Trocknen. Zur Verteilung von Flüssigkeit während eines Spülprogrammdurchlaufs sind im Flüssigkeitskreislauf einer Geschirrspülmaschine Ventile vorgesehen, die einen Flüssigkeitsweg öffnen oder schließen. Jedoch können Schmutzpartikel in der Flüssigkeit ein Ventil blockieren.

Die Aufgabe der Erfindung besteht darin, ein Haushaltsgerät, insbesondere Geschirrspülmaschine, bereitzustellen, bei dem ein zuverlässiger Ventilbetrieb gewährleistet ist.

Die Erfindung geht aus von einem wasserführendes Haushaltsgerät, insbesondere einer Geschirrspülmaschine, mit einer Flüssigkeitsleitung, in der ein Ventil angeordnet ist, das ein verstellbares Ventilelement aufweist, das zum Öffnen und Schließen des Ventils mit einem Ventilsitz zusammenwirkt.

Gemäß dem kennzeichnenden Teil des Patentanspruches 1 weist das Ventil ein thermisches Stellglied auf, mittels dem das Ventilelement um den Ventilhub verstellbar ist. Ein solches thermisches Stellglied kann bei einer Aktivierung im Vergleich zu herkömmlichen elektromagnetischen Stellgliedern beträchtliche Stellkräfte entwickeln, wodurch ein zuverlässiges Schließen des Ventils gewährleistet ist. Gegebenenfalls zwischen dem Ventilsitz und dem Ventilelement befindliche Schmutzpartikel können aufgrund der hohen Stellkraft durchtrennt werden.

Schmutzpartikel, die bei geöffnetem Ventil zwischen dem Ventilelement und dem Ventilsitz hängenbleiben, können somit beim Schließvorgang sozusagen abgeschnitten werden. Die Dichtfunktion zwischen dem Ventilelement und dem Ventilsitz ist somit nicht beeinträchtigt, da sich im Bereich des Strömungsspalts zwischen Ventilelement und Ventilsitz keine Schmutzpartikel dauerhaft festsetzen können. Das Ventil ist daher vor allem im Schmutz- und Brauchwasserbereich eines wasserführenden Haushaltsgerätes, insbesondere einer Geschirrspülmaschine, einsetzbar.

Das um den Ventilhub verstellbare Ventilelement kann mittels einer Druckfeder des Stellglieds vorgespannt sein. Bevorzugt ist das thermische Stellglied so ausgelegt, dass im stromlosen Zustand das Ventilelement mittels der Druckfeder in Anlage gegen den Ventilsitz gedrückt ist.

Im bestromten Zustand kann das Ventilelement des thermischen Stellglieds insbesondere entgegen der Federkraft der Druckfeder über den Ventilhub vom Ventilsitz beabstandet sein.

Das thermische Stellglied kann ein bei Temperaturerhöhung form- und/oder volumenveränderliches Material aufweisen, etwa ein Wachsmaterial. Das Wachsmaterial kann mittels eines elektrisch betätigbaren Heizelements erwärmbar sein, bspw. soweit, dass es zu einem Phasenübergang kommt, d.h. das Wachmaterial schmilzt. Beim Erwärmen des Wachsmaterials wird eine im Vergleich zu elektromagnetischen Stellgliedern wesentlich größere Stellkraft erzeugt. Die vom Wachsmaterial erzeugte Stellkraft wirkt entgegen der Federkraft der Druckfeder, wobei deren Federkraft kleiner als die Stellkraft ausgelegt ist. Bei Bestromung des Stellglieds kann somit das mit der Druckfeder vorgespannte Ventilelement entgegen seiner Vorspannkraft verstellt werden.

Zur Steigerung der Funktionsfähigkeit ist es von Bedeutung, wenn die Dichtfläche des Ventilsitzes sowie des Ventilelements im Wesentlichen frei von Schmutzpartikeln ist. Hierbei hat es sich als vorteilhaft erwiesen, wenn das thermische Stellglied zumindest im Wesentlichen in horizontaler Einbaulage verbaut ist. Dadurch kann erreicht werden, dass auch die Dichtflächen zwischen dem Ventilsitz und dem Ventilelement nicht in einer horizontalen Ebene ausgerichtet sind, sondern gegenüber einer solchen horizontalen Ebene geneigt sind, insbesondere vertikal ausgerichtet sind. Schmutzpartikel im Bereich des Strömungsspaltes zwischen Ventilsitz und Ventilelement können sich somit nicht dauerhaft in diesem Bereich absetzen, sondern werden durch Schwerkraftwirkung einfach von dem Strömungsspalt abgeführt.

Um ein Durchtrennen von zwischen dem Ventilelement und dem Ventilsitz hängengebliebenen Schmutzpartikeln zu gewährleisten, kann der Ventilsitz als eine zumindest im Wesentlichen scharfkantige Abrisskante ausgebildet sein.

Die Abrisskante kann im Querschnitt in Richtung auf das verstellbare Ventilelement spitzwinklig zulaufen. Eine Schneidfunktion kann insbesondere dann gewährleistet sein, wenn die Abrisskante in einem Winkel zwischen 30° und 50° zuläuft. Bevorzugt ist ein spitzer Winkel von 45°. In diesem Fall ist einerseits die Abrisskante noch ausreichend scharfkantig und andererseits ausreichend formstabil und auch im Kunststoffspritzgussverfahren noch einfach zu fertigen.

Der Ventilsitz kann rotationssymmetrisch eine Mündungsöffnung der Flüssigkeitsleitung begrenzen. Die rotationssymmetrische Außenkontur der Abrisskante kann dabei kegelstumpfförmig ausgebildet sein, um die oben genannte scharfkantige Geometrie des Ventilsitzes zu erreichen.

Das Ventil kann einen flüssigkeitsdurchströmten Ventilraum aufweisen, der mittels eines Ventilgehäuses eingegrenzt ist. Der Ventilsitz kann hierbei fertigungstechnisch einfach materialeinheitlich und einstückig zusammen mit dem Ventilgehäuse als Kunststoffteil hergestellt sein, bei dem der Ventilsitz in den Ventilraum einragt.

Ein Abführen von bereits innerhalb des Ventils befindlichen Schmutzpartikeln vom Dichtbereich zwischen Ventilsitz und Ventilelement kann dadurch unterstützt werden, dass die Flüssigkeitsleitung ausgehend von ihrer Mündungsöffnung in das Ventil mit einem vorgegebenen Gefälle nach unten abfällt, etwa nach Art eines Siphons, an dessen Siphonboden sich die Schmutzpartikel aufgrund des Leitungsgefälles sammeln können.

Das Abführen von Schmutzpartikeln im Strömungsbereich zwischen Ventilelement und dem Ventilsitz kann außerdem dadurch unterstützt werden, dass vertikal unterhalb der Abrisskante ein Freiraum bereitgestellt wird, in dem sich die Schmutzpartikel sammeln können. Bevorzugt ist es, wenn der Freiraum unmittelbar über einen Durchlass in den weiterführende Flüssigkeitsleitung einmündet, so dass die Schmutzpartikel aufgrund der Schwerkraft aus dem Ventilraum durch den Durchlass nach außen verlagert werden können.

Bevorzugt kann die Erfindung insbesondere in einer Geschirrspülmaschine eingesetzt werden, die einen zusätzlichen Speicherbehälter aufweist. In dem Speicherbehälter kann Spülflüssigkeit zwischengespeichert werden, die nach Ausführung eines Teilprogrammschrittes eines Spülgangs nicht mehr benötigt wird. Die nicht mehr benötigte Spülflüssigkeit wird vom Spülraum mittels einer Umwälzpumpe sowie bei geöffnetem Speicherbehälterventil in den Speicherbehälter gepumpt. Anschließend wird das Speicherbehälterventil geschlossen und bspw. bis zum nächsten Spülgang zwischengespeichert und beim nächsten Spülgang zum Vorspülen des Spülgutes eingesetzt werden. Um das Befüllen und Entleeren des Speicherbehälters zu steuern, ist ein Speicherbehälterventil vorgesehen, mit dem eine Regeleinrichtung der Geschirrspülmaschine den Flüssigkeitsweg zum Speicherbehälter öffnen oder schließen kann.

Das Speicherbehälterventil ist strömungstechnisch zwischen dem Spülbehälter und dem Speicherbehälter, das heißt im Schmutz- oder Brauchwasserbereich der Geschirrspülmaschine, angeordnet. Hier besteht die Problematik, dass bei geöffnetem Ventil Schmutzpartikel innerhalb des Speicherbehälterventils hängenbleiben und sich dort festsetzen können. In diesem Fall kann es zu einer Störung oder Undichtheit am Ventil und somit zu einer Fehlfunktion des Speicherbehälters kommen.

Zur Rückführung der zwischengespeicherten Spülflüssigkeit in den Flüssigkeitskreislauf der Geschirrspülmaschine wird das Speicherbehälterventil geöffnet, wodurch die Spülflüssigkeit aus dem Speicherbehälter strömen kann. Die Spülflüssigkeit kann dabei unter Schwerkraftwirkung, das heißt mit geringer Geschwindigkeit, vom Speicherbehälter in den Spülraum der Geschirrspülmaschine einströmen.

Das Ablassen der zwischengespeicherten Spülflüssigkeit aus dem Speicherbehälter ist im Hinblick auf eine Störung des Speicherbehälterventils kritisch. In diesem Fall besteht nämlich die Gefahr, dass Schmutzpartikel aus dem Speicherbehälter mitgerissen werden und das Speicherbehälterventil zusetzen können.

Demgegenüber wird beim Befüllen des Speicherbehälters Spülflüssigkeit mittels der Umwälzpumpe bei großer Geschwindigkeit in den Speicherbehälter gepumpt. Auf diese Weise wird der Siphonboden regelmäßig mit großer Flüssigkeitsgeschwindigkeit durchspült, wodurch ein Verstopfen des Siphons vermieden werden kann.

In einer Weiterbildung ist vorzugsweise vorgesehen, dass das wasserführende Haushaltsgerät einen zweiten Speicherbehälter aufweist, in dem Frischwasser zwischenspeicherbar ist, und dass eine zweite Flüssigkeitsleitung den Spülbehälter des wasserführenden Haushaltsgeräts mit dem zweiten Speicherbehälter verbindet. Dieser zweite Speicherbehälter kann dazu verwendet werden, Frischwasser aus einem hausseitigen Versorgungsnetz zu speichern. Z.B. kann der zweite Speicherbehälter zu Beginn eines Spülprogrammdurchlaufs zur Reinigung und Trocknung von Spülgut mit Frischwasser gefüllt werden, dass sich in der Zwischenzeit bis zur Verwendung während des Spülprogrammdurchlaufs auf Zimmertemperatur erwärmen kann, so dass Heizenergie gespart werden kann.

Um den zweiten Speicherbehälter zu entleeren kann eine der zweiten Flüssigkeitsleitung ein vorgesehen sein, in der ein zweites Ventil angeordnet ist, das ein verstellbares Ventilelement aufweist, das zum Öffnen und Schließen des Ventils mit einem Ventilsitz zusammenwirkt, wobei das zweite Ventil ein Aktuator-Stellglied aufweist, mittels dem das Ventilelement des zweiten Ventils verstellbar ist.

Dabei ist vorzugsweise vorgesehen, dass das thermische Stellglied eine größere Stellkraft zum Verstellen des Ventilelements des ersten Ventils zu erzeugen vermag als das Aktuator-Stellglied des zweiten Ventils, da das erste Ventil im Gegensatz zum zweiten Ventil im Schmutzwasserbereich des wasserführenden Haushaltsgeräts angeordnet ist.

Ferner ist vorzugsweise vorgesehen, dass wenigstens der zweite Speicherbehälter thermisch leitend mit dem Spülbehälter verbunden ist. Dies erlaubt es, das Innere des zweiten Spülbehälters durch Abwärme aus dem Spülbehälter bei Bedarf zu erwärmen. So kann der Energiebedarf weiter gesenkt werden.

Schließlich ist vorzugsweise vorgesehen, dass durch das thermische Stellglied das Ventilelements entgegen einem Förderdruck einer Pumpe, insbesondere einer Umwälzpumpe, mit der Flüssigkeit auf zu reinigendes Spülgut aufgebracht wird, verstellbar ist. Dies erlaubt eine Ventilbetätigung auch bei laufender Umwälzpumpe, so dass das Ventil geöffnet und/oder geschlossen werden kann um eine Speicherbehälter für Spülflotte zu füllen bzw. diesen Füllvorgang zu beenden.

Nachfolgend ist ein Ausführungsbeispiel der Erfindung anhand der beigefügten Figuren beschrieben.

Es zeigen:
- Fig. 1: in einem schematischen Blockdiagramm eine Geschirrspülmaschine mit einem Speicherbehälter;
- Fig. 2: in einer vergrößerten Seitenschnittdarstellung das mit dem Speicherbehälter verbundene Speicherbehälterventil beim Ablassen von zwischengespeicherter Spülflüssigkeit;
- Fig.3: in einer Ansicht entsprechend der Fig. 2 den Speicherbehälter mit geschlossenem Speicherbehälterventil;
- Fig. 4 und 5: jeweils vergrößerte Schnittansichten des Speicherbehälterventils in verschiedenen Betriebszuständen; sowie
- Fig. 6a und 6b: jeweils Prinzipdarstellungen zur Veranschaulichung der Funktionsweise des thermischen Stellglieds.

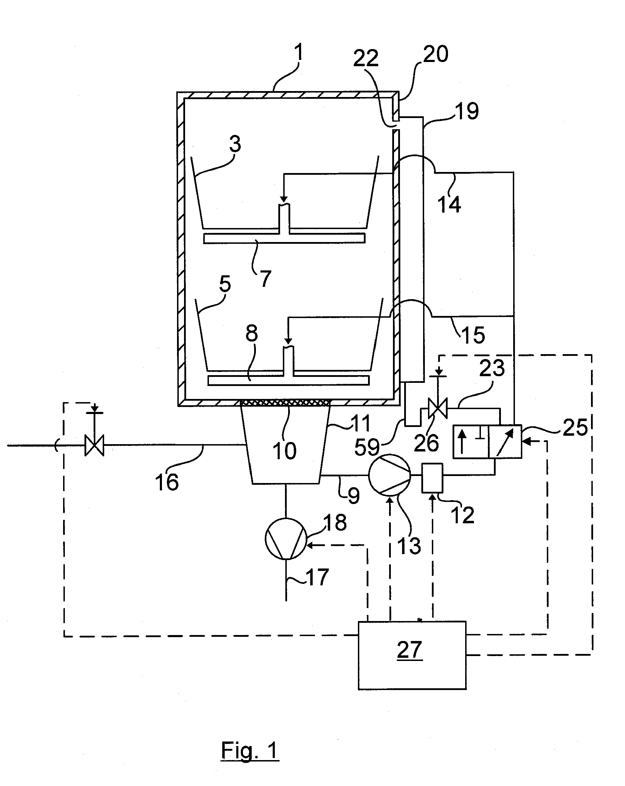

In der Fig. 1 ist schematisch eine Geschirrspülmaschine mit einem, einen Spülraum begrenzenden Spülbehälter 1 gezeigt. Im Spülraum des Spülbehälters 1 kann ein nicht dargestelltes, zu reinigendes Spülgut in Geschirrkörben 3, 5 angeordnet werden. Im gezeigten Spülbehälter 1 sind beispielhaft zwei, in unterschiedlichen Sprühebenen vorgesehene Sprüharme 7, 8 angeordnet, über die das Spülgut mit Spülflüssigkeit beaufschlagt wird. Im Spülbehälterboden ist ein Pumpentopf 11 mit einer nur grob angedeuteten Siebanordnung 10 vorgesehen. Vom Pumpentopf 11 ist eine Umwälzleitung 9 mit darin angeordneter Umwälzpumpe 13 weggeführt. Die Umwälzleitung 9 ist über Zuleitungen 14, 15 strömungstechnisch mit den Sprüharmen 7, 8 verbunden. Der Umwälzpumpe 13 nachgeschaltet ist ein, als Wasserheizung bezeichnetes Heizelement 12.

Der Pumpentopf 11 ist außerdem über Anschlussstutzen mit einer, mit dem Wasserversorgungsnetz gekoppelten Frischwasser-Zuleitung 16 sowie mit einer Ablaufleitung 17 in Verbindung, in der eine Laugenpumpe 18 zum Abpumpen von Spülflüssigkeit aus dem Spülbehälter 1 angeordnet ist. Der Spülbehälter 1 weist an seiner, in der Fig. 1 rechten Seite als Speicherbehälter 19 einen sogenannten Speicherbehälter auf, der nach Art eines Wärmetauschers thermisch gekoppelt in Anlage mit einer Seitenwand 20 des Spülbehälters 1 ist.

In dem Speicherbehälter 19 kann Spülflüssigkeit zwischengespeichert werden, die nach Ausführung eines Teilprogrammschrittes eines Spülganges nicht mehr benötigt wird. Der Speicherbehälter 19 ist in seinem oberen Bereich über eine Be- und Entlüftungsöffnung 22 strömungstechnisch in Verbindung mit dem Spülraum.

Während der Durchführung eines Spülgangs sind im Flüssigkeitskreislauf unter anderem der Pumpentopf 11 mit zugeordneter Siebanordnung 10, die Umwälzleitung 9, die Zuleitungen 14, 15 sowie die beiden Sprüharme 7, 8 integriert.

Stromab des Heizelementes 12 ist in der Umwälzleitung 9 eine als Drei-Wege-Schaltventil 25 dargestellte Wasserweiche vorgesehen, an der eine Verbindungsleitung 23 abzweigt, die zum Speicherbehälter 19 führt.

In der in der Fig. 1 gezeigten Schaltstellung des Drei-Wege-Schaltventils 25 ist die Verbindung zum Speicherbehälter 19 unterbrochen und die Umwälzleitung 9 mit den Zuleitungen 14, 15 verbunden. In dieser Schaltstellung des Drei-Wege-Schaltventils 25 kann daher die Spülflüssigkeit zur Durchführung des Spülgangs in der Geschirrspülmaschine zirkuliert werden.

Das Drei-Wege-Schaltventil 25 verbindet demgegenüber in einer in der Fig. 1 nicht gezeigten Schaltstellung die Umwälzleitung 9 mit der zum Speicherbehälter 19 führenden Verbindungsleitung 23 und unterbricht den Strömungsweg zu den Zuleitungen 14, 15. In dieser Schaltstellung kann zur Reinigung es Speicherbehälters 19 die Spülflüssigkeit mit hoher Strömungsgeschwindigkeit in den Speicherbehälter 19 gepumpt werden und diesen füllen, bis die Spülflüssigkeit über die Be- und Entlüftungsöffnung 22 in den Spülbehälter 1 eintritt und entlang der Spülbehälterwand 20 vorbei an den Geschirrkörben 3, 5 wieder in den Pumpentopf 11 mit zugeordneter Siebanordnung 10 rückgeführt wird. Auf diese Weise können Schmutzpartikel, Fettrückstände, etc. aus dem Speicherbehälter 19 geführt werden.

Damit das Befüllen oder Entleeren des Speicherbehälters 19 mittels der Regeleinrichtung 27 gesteuert werden kann, ist ein Speicherbehälterventil 26 vorgesehen. Das Ventil 26 ist in der zum Speicherbehälter 19 führenden Verbindungsleitung 23 angeordnet und zum Beispiel während der oben genannten Speicherbehälter-Reinigung in seiner OffenStellung angeordnet.

Beispielhaft kann der Spülgang mit einem Vorspülschritt gestartet werden, bei dem eine im Speicherbehälter 19 zwischengespeicherte Klarspülwassermenge vom vorangegangenen Spülgang in den Pumpentopfbereich des Spülbehälters 1 eingelassen wird. Hierzu wird das Speicherbehälterventil 26 geöffnet und das Drei-Wege-Ventil 25 entsprechend verstellt. Die zwischengespeicherte Klarspülmenge kann daher alleine durch Schwerkraftwirkung in den Pumpentopfbereich des Spülbehälters 1 einströmen.

Anschließend wir das Drei-Wege-Schaltventil 25 zurück in seine in der Fig. 1 gezeigte Schaltstellung geschaltet sowie die Umwälzpumpe 13 gestartet, wodurch das vom Speicherbehälter 19 abgelassene Klarspülwasser zirkulieren kann. Nach Ausführung des Vorspülschrittes wird die Spülflüssigkeit mittels der Laugenpumpe 18 abgepumpt und anschließend Frischwasser für einen folgenden Reinigungsschritt in den Pumpentopfbereich zugeführt.

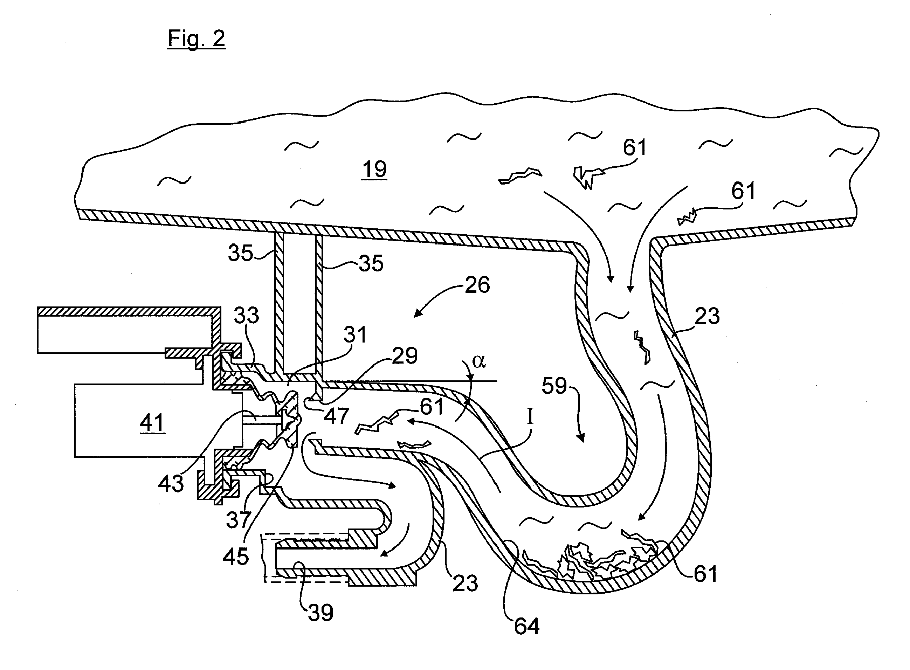

Wie aus der Fig. 2 hervorgeht, ist die vom Speicherbehälter 19 kommende Verbindungsleitung 23 über eine Mündungsöffnung 29 mit einem Ventilraum 31 des Speicherbehälterventils 26 in Verbindung. Der Ventilraum 31 ist radial außenseitig mit einem Stutzen 33 begrenzt. Der Stutzen 33 ist über zwei Versteifungsrippen 35 mit der Unterseite des Speicherbehälters 19 in Verbindung. Der Ventilraum 31 mündet außerdem an seiner Bodenseite über einen Durchlass 37 wiederum in die Verbindungsleitung 23, die über einen Anschlussstutzen 39 an der Wasserweiche 25 anschließbar ist. Die Verbindungsleitung 23 ist dabei ausgehend vom bodenseitigen Durchlass 37 des Ventils 26 über eine U-förmige Biegung vertikal nach unten weitergeführt.

In den, den Ventilraum 31 begrenzenden Stutzen 33 ist im vorliegenden Ausführungsbeispiel als thermisches Stellglied 41 ein Thermoaktuator eingesetzt, an dessen Ventilstößel 43 ein über einen Ventilhub verstellbarer Ventilteller 45 befestigt ist.

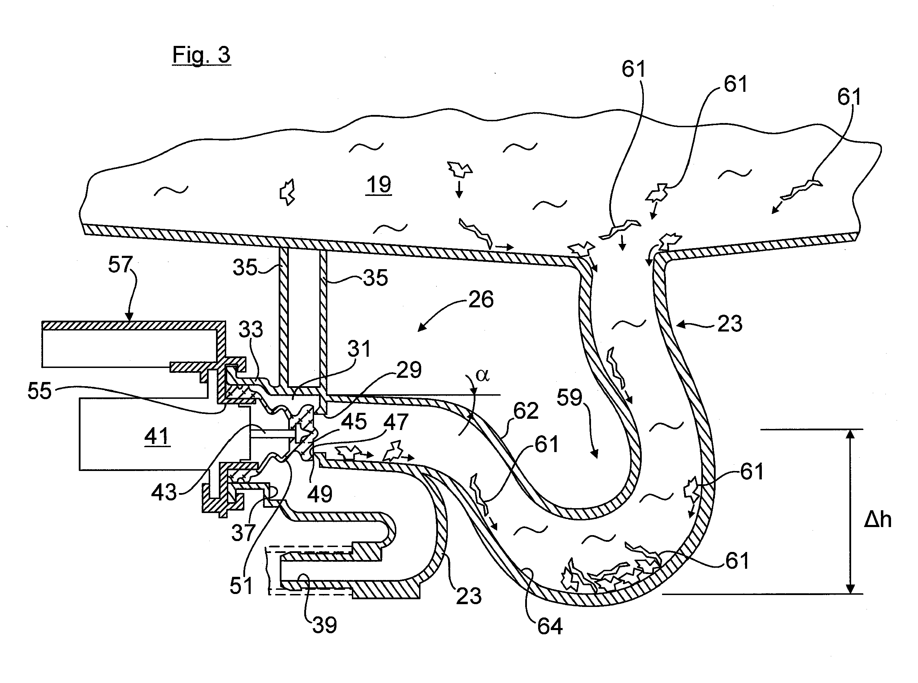

In der Fig. 2 ist der verstellbare Ventilteller 45 in seiner Offenstellung gezeigt, während er in der Fig. 3 in seiner Schließstellung ist, in der die Dichtstellen 47 des Ventiltellers 45 und des Ventilsitzes 49 in Dichtanlage gedrückt sind. Der Ventilsitz 49 ist umfangsseitig um die Mündungsöffnung 29 gezogen. Dabei sind die Dichtstellen beziehungsweise Dichtflächen 47 des Ventilsitzes 49 und des Ventiltellers 45 gemäß der Fig. 3 in einer vertikalen Ebene ausgerichtet.

Der Ventilteller 47 ist gemäß den Fig.2 bis 5 integraler Bestandteil eines Membranelementes 51, das als ein im Wesentlichen rotationssymmetrisches Silikonbauteil gebildet ist. Das rotationssymmetrische Membranelement 51 ist mit seinem offenen ringförmigen Ende in einem Ringspalt zwischen dem Anschlussstutzen 33 und einem innen liegenden Rohrstutzen 55 eines Gehäuseteils 57 eingesetzt. Das Stellglied 41 ist daher nicht unmittelbar in den Anschlussstutzen 33 eingesetzt, sondern unter Zwischenlage des Gehäuseteils 57.

Wie aus der Fig. 3 weiter hervorgeht, weist die Flüssigkeitsleitung 23 zwischen dem Speicherbehälterventil 26 und dem Speicherbehälter 19 ein Siphon 59 auf, das die in der Fig. 3 angedeuteten Schmutzpartikel 61 vom Ventil 26 zurückhält. Dass Siphon 49 ist über einen Leitungsabschnitt 62 unmittelbar an die Mündungsöffnung 29 des Ventils 26 geführt. Der Leitungsabschnitt 62 des Siphons 59 fällt dabei unmittelbar ausgehend vom Ventil 26 mit einem ansteigenden Neigungswinkel α nach unten bis zum Siphonboden 64.

Der Leitungsabschnitt 62 des Siphons 59 ist somit ausgehend von der Mündungsöffnung 29 stets über den Neigungswinkel α nach unten geneigt, wodurch die Schmutzpartikel 61 unter Schwerkraftwirkung weg vom Ventil 26 zum Siphonboden 64 wandern können. Der Siphonboden 64 ist dabei um eine Höhendifferenz Δh unterhalb des Speicherbehälterventils 26 angeordnet.

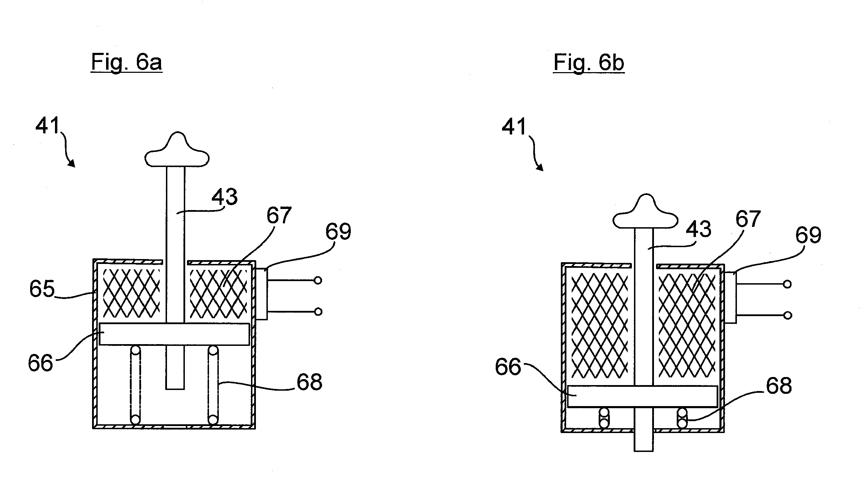

In den Fig. 6a und 6b ist der grundsätzliche Aufbau und die Funktionsweise des thermischen Stellglieds 41 veranschaulicht. Demzufolge weist das Stellglied 41 ein Gehäuse 65 auf, in dem ein Kolben 66 verstellbar geführt ist.

Der Kolben 66 unterteilt den Innenraum des Gehäuses 65 in zwei Arbeitskammern, von denen die obere Arbeitskammer mit einem Wachsmaterial 67 gefüllt ist, das bei Wärmebeaufschlagung sein Volumen erhöht.

In der gegenüberliegenden Arbeitskammer ist koaxial zum Ventilstößel 43 eine Schraubendruckfeder 68 geordnet, die den Kolben 66 und den damit verbundenen Ventilstößel 43 in der Fig. 6a nach oben drückt. Die obere Arbeitskammer ist außerdem teilweise von einem elektrischen Heizelement 69 begrenzt, das beispielsweise ein Widerstand mit einem positiven Temperaturkoeffizienten (PTC) sein kann.

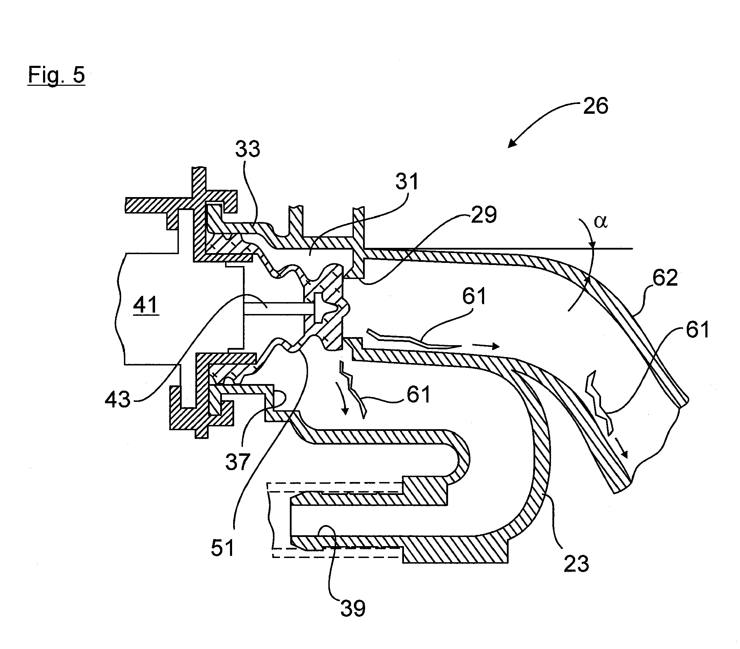

In der Fig. 6a ist das thermische Stellglied 41 in seinem stromlosen Zustand gezeigt. In diesem Fall weist das Wachsmaterial 67 ein geringes Volumen auf, wodurch der federvorgespannte Ventilstößel 43 aus dem Gehäuse 65 gefahren ist. In diesem Fall würde der mit dem Ventilstößel 43 verbundene Ventilteller 45 sich in Schließstellung an Anlage mit dem Ventilsitz 49 befinden, wie es in der Fig. 3 und 5 gezeigt ist.

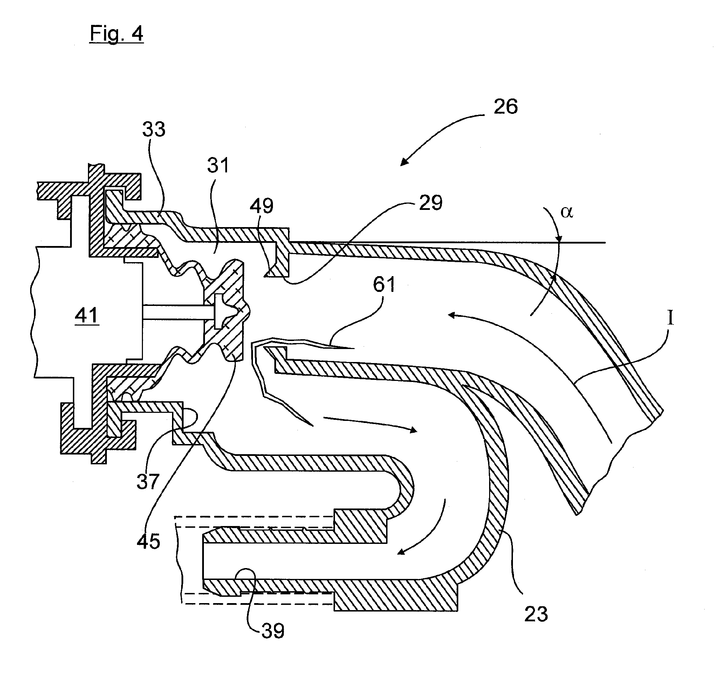

In der Fig. 6b ist der bestromte Zustand des Stellglieds 41 gezeigt. Demzufolge kann das Heizelement 69 das in der oberen Arbeitskammer befindliche Wachsmaterial 67 erwärmen, wodurch sich dessen Volumen vergrößert. Mit der Volumenänderung des Wachsmaterial 67 wird der Kolben 66 mit einer Stellkraft beaufschlagt, die größer als die Federkraft der Druckfeder 68 ist. Der Ventilstößel 43 wird somit entgegen der Druckfederkraft in das Gehäuse 65 eingefahren. Der in der Fig. 6b gezeigte Zustand entspricht daher der in den Fig. 2 und 4 dargestellten Offenstellungen des Ventils 26.

Wie insbesondere aus der Fig. 4 und 5 hervorgeht, ist der Ventilsitz 49 in Richtung auf den Ventilteller 45 scharfkantig ausgebildet. Dadurch können Schmutzpartikel zwischen dem Ventilsitz 49 und dem Ventilteller 45 beim Schließvorgang des Ventiltellers 45 durchtrennt werden, wie es anhand der Fig. 4 und 5 gezeigt ist. Demzufolge ist gemäß der Fig. 4 ein langgezogener Schmutzpartikel 61 beim Entleeren des Speicherbehälters 19 am Ventilsitz 49 hängengeblieben.

Beim Schließen des Ventils 26 wird der Ventilteller 45 mit großer Federkraft der Druckfeder 68 gegen den Ventilsitz gedrückt. Die Federkraft ist dabei derart bemessen, dass der Schmutzpartikel 61 gemäß der Fig. 5 in zwei Teile durchtrennt wird, von denen ein abgetrennter Teil durch den Durchlass 37 unter Schwerkraftwirkung in die weiterführende Flüssigkeitsleitung 23 verlagert wird. Das andere Teil kann ebenfalls unter Schwerkraftwirkung zum Siphonboden 64 verlagert werden.

Nachfolgend werden anhand der Fig. 2 und 3 unterschiedliche Betriebszustände der Geschirrspülmaschine beschrieben. So ist in der Fig. 3 das Speicherbehälterventil 26 in seiner geschlossenen Stellung gezeigt, wodurch die vorher in den Speicherbehälter 19 gepumpte Spülflüssigkeit zwischengespeichert werden kann. Die im Speicherbehälter 19 sowie in der Verbindungsleitung 23 vorhandenen Schmutzpartikel 61 lagern sich daher im Laufe der Zeit am Boden des Speicherbehälters 19 und/oder am Siphonboden 64 ab. Das Speicherbehälterventil 26 bleibt dabei im Bereich der Dichtflächen 47 weitgehend frei von Schmutzpartikeln 61.

In der Fig. 2 ist das Speicherbehälterventil 26 in seiner geöffneten Stellung gezeigt, in der der Ventilteller 45 um einen Ventilhub nach links verstellt ist. Auf diese Weise ist ein Strömungsspalt zwischen dem Ventilteller 45 und dem Ventilsitz 49 freigegeben. Die im Speicherbehälter 19 zwischengespeicherte Spülflüssigkeit wird somit unter Schwerkraftwirkung aus dem Speicherbehälter 19 abgelassen und gelangt zurück in den Flüssigkeitskreislauf der Geschirrspülmaschine. Die zwischengespeicherte Spülflüssigkeit durchströmt somit in der Strömungsrichtung 1 das Speicherbehälterventil 26. Der Höhenunterschied 4h zwischen dem Speicherbehälterventil 26 und dem Siphonboden 64 ist dabei so ausgelegt, dass die am Siphonboden 64 aufgefangenen Schmutzpartikel 61 durch die Strömung 1 größtenteils nicht bis zum Speicherbehälterventil 26 mitgerissen werden können.

### BEZUGSZEICHENLISTE

- 1: Spülbehälter
- 3, 5: Geschirrkörbe
- 7,8: Sprüharme
- 9: Umwälzleitung
- 10: Siebanordnung
- 11: Pumpentopf
- 12: Heizelement
- 13: Umwälzpumpe
- 14, 15: Zuleitungen
- 16: Frischwasser-Zuleitung
- 17: Ablaufleitung
- 18: Laugenpumpe
- 19: Speicherbehälter
- 20: Spülbehälter-Seitenwand
- 22: Be- und Entlüftungsöffnung
- 23: Verbindungsleitung
- 25: Drei-Wege-Schaltventil
- 26: Speicherbehälterventil
- 27: Regeleinrichtung
- 29: Mündungsöffnung
- 31: Ventilraum
- 33: Anschlussstutzen
- 37: Durchlass
- 39: Stutzen
- 41: Stellglied
- 43: Ventilstößel
- 45: Ventilelement
- 47: Dichtstellen
- 49: Ventilsitz, Abrisskante
- 51: Membranelement
- 55: Rohrstutzen
- 57: Gehäuseteil
- 59: Siphon
- 61: Schmutzpartikel
- 62: Leitungsabschnitt
- 64: Siphonboden
- 65: Gehäuse des Stellglieds 41
- 66: Kolben
- 67: form- und/oder volumenveränderliches Material
- 68: Druckfeder
- 69: Heizelement

## Patentansprüche

1. Wasserführendes Haushaltsgerät, insbesondere Geschirrspülmaschine, mit einer Flüssigkeitsleitung (23), in der ein Ventil (26) angeordnet ist, das ein verstellbares Ventilelement (45) aufweist, das zum Öffnen und Schließen des Ventils (26) mit einem Ventilsitz (49) zusammenwirkt, **dadurch gekennzeichnet, dass** das Ventil (26) ein thermisches Stellglied (41) aufweist, mittels dem das Ventilelement (45) verstellbar ist.

2. Wasserführendes Haushaltsgerät nach Anspruch 1, **dadurch gekennzeichnet, dass** im stromlosen Zustand des Stellglieds (41) das Ventilelement (45) mittels einer Druckfeder (68) gegen den Ventilsitz (49) gedrückt ist.

3. Wasserführendes Haushaltsgerät nach Anspruch 1 oder 2, **dadurch gekennzeichnet, dass** im bestromten Zustand des Stellglieds (41) das Ventilelement (45), insbesondere entgegen der Federkraft der Druckfeder (68), über den Ventilhub vom Ventilsitz (49) beabstandet ist.

4. Wasserführendes Haushaltsgerät nach Anspruch 1, 2 oder 3, **dadurch gekennzeichnet, dass** das thermische Stellglied (41) ein bei Temperaturerhöhung form- und/oder volumenveränderliches Material aufweist, das mittels eines Heizelements (69) erwärmbar ist und unter Form- und/oder Volumenänderung einen Ventilhub des Ventilelements (45) erzeugt.

5. Wasserführendes Haushaltsgerät nach Anspruch 4, **dadurch gekennzeichnet, dass** das Material, insbesondere ein Wachs, mindestens bis zum Auftreten eines Phasenübergangs erwärmbar ist.

6. Wasserführendes Haushaltsgerät nach einem der vorhergehenden Ansprüche, **dadurch gekennzeichnet, dass** die Dichtflächen (47) zwischen dem Ventilsitz (49) und dem Ventilelement (45) in einer Dichtebene liegen, die gegenüber einer horizontalen Ebene geneigt ist, und insbesondere in vertikaler Richtung ausgerichtet ist.

7. Wasserführendes Haushaltsgerät nach einem der vorhergehenden Ansprüche, **dadurch gekennzeichnet, dass** das thermische Stellglied (41) und/oder der Ventilsitz (49) in einen flüssigkeitsdurchströmten Ventilraum (31) des Ventils (26) einragen.

8. Wasserführendes Haushaltsgerät nach einem der vorhergehenden Ansprüche, **dadurch gekennzeichnet, dass** ein Ventilraum (31) des Ventils (26) vertikal unterhalb des Ventilsitzes (49) einen bodenseitigen Durchlass (37) aufweist, der mit der Flüssigkeitsleitung (23) verbunden ist.

9. Wasserführendes Haushaltsgerät nach einem der vorhergehenden Ansprüche, **dadurch gekennzeichnet, dass** das wasserführende Haushaltsgerät einen Speicherbehälter (19) aufweist, in dem Spülflüssigkeit zwischenspeicherbar ist, und dass die Flüssigkeitsleitung (23) einen Spülbehälter (1) des wasserführenden Haushaltsgeräts mit dem Speicherbehälter (19) verbindet.

10. Wasserführendes Haushaltsgerät nach Anspruch 9, **dadurch gekennzeichnet, dass** in einer ersten Strömungsrichtung (1) die im Speicherbehälter (19) zwischengespeicherte Spülflüssigkeit, insbesondere unter Schwerkraftwirkung, vom Speicherbehälter (19) in einen Spülraum des Haushaltsgeräts einströmt, wobei in einer entgegengesetzten zweiten Strömungsrichtung (II) die Spülflüssigkeit mittels einer Umwälzpumpe (13) in den Speicherbehälter (19) förderbar ist.

11. Wasserführendes Haushaltsgerät nach einem der vorhergehenden Ansprüche, **dadurch gekennzeichnet, dass** das wasserführende Haushaltsgerät einen zweiten Speicherbehälter aufweist, in dem Frischwasser zwischenspeicherbar ist, und dass eine zweite Flüssigkeitsleitung den Spülbehälter (1) des wasserführenden Haushaltsgeräts mit dem zweiten Speicherbehälter verbindet, wobei in der zweiten Flüssigkeitsleitung (23) ein zweites Ventil angeordnet ist, das ein verstellbares Ventilelement aufweist, das zum Öffnen und Schließen des Ventils mit einem Ventilsitz zusammenwirkt, wobei das zweite Ventil ein Aktuator-Stellglied aufweist, mittels dem das Ventilelement des zweiten Ventils verstellbar ist.

12. Wasserführendes Haushaltsgerät nach Anspruch 11, **dadurch gekennzeichnet, dass** das thermische Stellglied (41) eine größere Stellkraft zum Verstellen des Ventilelements (45) des ersten Ventils (26) zu erzeugen vermag als das Aktuator-Stellglied des zweiten Ventils.

13. Wasserführendes Haushaltsgerät nach Anspruch 12, **dadurch gekennzeichnet, dass** wenigstens der zweite Speicherbehälter thermisch leitend mit dem Spülbehälter (1) verbunden ist.

14. Wasserführendes Haushaltsgerät nach einem der vorhergehenden Ansprüche, **dadurch gekennzeichnet, dass** durch das thermische Stellglied (41) das Ventilelements (45) entgegen einem Förderdruck einer Pumpe, insbesondere einer Umwälzpumpe, verstellbar ist.

15. Ventil für ein wasserführendes Haushaltsgerät nach einem der vorhergehenden Ansprüche.
